# EUROPÄISCHE PATENTSCHRIFT

(11) **EP 3 769 261 B1**
(45) Veröffentlichungstag und Bekanntmachung des Hinweises auf die Patenterteilung: **16.08.2023**
(21) Anmeldenummer: 19711072.9
(22) Anmeldetag: 12.03.2019
(51) Int. Cl.: G06K 19/077

(54) **ANORDNUNG AUS EINEM SCHILD UND EINEM DAS SCHILD TRAGENDEN SCHILDTRÄGER**
ARRANGEMENT OF A PLATE AND A PLATE SUPPORT CARRYING THE PLATE
AGENCEMENT D'UNE PLAQUE ET D'UN SUPPORT DE PLAQUE PORTANT LA PLAQUE

(30) Priorität: 20.03.2018 DE 102018106432
(43) Veröffentlichungstag der Anmeldung: 27.01.2021
(73) Patentinhaber: Erich Utsch AG, 57080 Siegen (DE); RAKO Security Label Produktsicherungs GmbH, 22969 Witzhave (DE)
(72) Erfinder: WISCHNEWSKI, Thorsten, 21493 Schwarzenbek (DE); KUBE, Raik, 22549 Hamburg (DE); ENGELBERTS, Stefan, 57234 Wilnsdorf (DE); GROH, Dietmar, 53773 Hennef (DE)
(74) Vertreter: Patentanwälte Bauer Vorberg Kayser
(86) Internationale Anmeldenummer: PCT/EP2019/056195
(87) Internationale Veröffentlichungsnummer: WO 2019/179831

(56) Entgegenhaltungen:
- EP-A1- 3 399 469
- DE-A1-102006 062 308
- DE-A1-102007 027 539
- US-A1- 2008 111 760
- US-A1- 2008 258 875
- US-A1- 2010 314 454

## Beschreibung

Die vorliegende Erfindung betrifft eine Anordnung aus einem Schild und einem das Schild ortsfest an einem Objekt, zum Beispiel einem bewegbaren Objekt, tragenden Schildträger nach dem Oberbegriff des Anspruchs 1.

Es besteht oft die Aufgabe, bewegbare Objekte, beispielsweise Fahrzeuge, eindeutig zu kennzeichnen und einen technisch sicheren Weg bereitzustellen, diese Objekte in bestimmten Situationen zu identifizieren und deren Nachverfolgbarkeit zu gewährleisten.

Bei entsprechenden optischen Verhältnissen und geringer Verschmutzung des Schilds ist es möglich, eine automatische Identifizierung des bewegbaren Objekts (z. B. eines Kraftfahrzeugs) auf optischem Wege über Kamerasysteme durchzuführen (z. B. ALPR - Automatic License Plate Recognition). Aufgrund möglicher störender Einflüsse wie beispielsweise eine Verschmutzung des Schilds, schlechte Sicht usw. ist eine automatische optische Erkennung mit einer gewissen Unsicherheit behaftet. Darüber hinaus kommt es auch vor, dass an ein Objekt bzw. Fahrzeug falsche oder gefälschte Schilder bzw. Kennzeichen montiert werden.

Ein heute mittlerweile übliches Markierungs- und Identifizierungsverfahren stellt beispielsweise die passive UHF-RFID-Technologie dar.

Insbesondere Kraftfahrzeuge werden staatlich registriert und erhalten zur Identifikation ein optisch sichtbares, offizielles Kennzeichenschild. Um eine automatische Identifizierung und Nachverfolgung (Tracking) durchzuführen, werden beispielsweise UHF-RFID-Tags als selbsthaftende Etiketten ans Innere einer Windschutzscheibe von Kraftfahrzeugen geklebt, sogenannte "UHF-RFID-Windshield-Labels". Viele Windschutzscheiben haben jedoch aus Gründen der Wärmeisolierung eine metallisierte Schicht im gesamten Verbund, was die HF-Eigenschaften des RFID-Tags deutlich negativ beeinflusst und somit ihre ordnungsgemäße Funktion enorm einschränkt.

Die Integration eines RFID-Tags in den Bereich von Kennzeichenschildern erscheint hier als sinnvolle Alternative. Eine bekannte Lösung ist die Anbringung sogenannter On-Metall-Tags auf das Schild bzw. Kennzeichen, welches üblicherweise aus Aluminium gefertigt ist, um eine Kennzeichennummer (Legende) in das Kennzeichen einzuprägen. Die erzielbaren Lesereichweiten dieser Tags werden durch die Nähe des RFID-Tags zum metallischen Kennzeichenschild stark eingeschränkt.

In einer weiteren bekannten Lösung wird das Kennzeichen selbst durch Einbringung eines Schlitzes und einer Koppelschleife mit RFID-Chip zur Antenne. Eine solche Lösung ist beispielsweise in der DE 10 2009 033 559 A1 beschrieben.

Die ordnungsgemäße Herstellung derartige Kennzeichen stellt jedoch eine große Herausforderung dar, da die schlitzartige Antennenstruktur mit den Erfordernissen der für die Einbringung der Kennzeichenlegende zu prägenden Strukturen oft in Konflikt gerät und somit die Qualität der RFID-Funktion durch den Verarbeitungsprozess des Kennzeichenrohlings in Mitleidenschaft gezogen wird, woraus komplette Systemausfälle des RFID-Tags resultieren können.

Weitere Beispiele von Kraftfahrzeugkennzeichen mit in diesen integriertem RFID-Tag zeigen beispielsweise die US 2009/0021379 A1, US 2007/0171077 A1 und US 2008/0042848 A1.

Aus der US 6 025 784 A ist weiterhin eine Integration eines RFID-Tags in einen ein Kennzeichenschild an einem Kraftfahrzeug haltenden Kennzeichenrahmen bekannt. Die Antenne des RFID-Tags ist als im Randbereich des Kennzeichenrahmens angeordnete Schleifenantenne (Loop-Antenne) ausgebildet.

Die GB 2 435 344 A beschreibt ebenfalls einen mit einem RFID-Tag ausgestatteten Kennzeichenhalter, bei dem ein mittlerer Bereich des Kennzeichenhalters als flächige Antenne fungieren kann. Zudem wird vorgeschlagen, durch das Entfernen eines montierten Kennzeichens vom Kennzeichenhalter, einen Stromkreis zu öffnen, beispielsweise durch das Zerstören eines Kabels zwischen dem Kennzeichenschild und dem RFID-Tag, um den RFID-Tag auf diese Weise funktionsuntüchtig zu machen.

Ebenfalls ist aus der GB 2 460 236 A ein an einem Kennzeichenhalter angebrachter RFID-Tag samt Antenne bekannt, der zudem einen Infrarot-Transmitter und -Empfänger beinhaltet. Auf der Rückseite des Kennzeichenschilds ist eine reflektierende Folie angebracht, die das Infrarot-Signal reflektiert. Sobald das Kennzeichen entfernt wird, erfolgt keine Reflektion mehr, so dass der RFID-Tag eine möglicherweise unerlaubte Entfernung des Kennzeichenschilds vom Kennzeichenhalter detektieren kann.

Die WO 2006/136847 A2 beschreibt ein Kennzeichenschild und einen zweiteiligen Kennzeichenrahmen mit einem Elektronikmodul, das entweder am bzw. im Kennzeichenschild oder am bzw. im Kennzeichenrahmen angeordnet ist. Das Elektronikmodul kann selbst eine Antenne aufweisen oder wird mit einer Antenne verbunden, die in einem das Kennzeichenschild umlaufenden Teil des Kennzeichenrahmens angeordnet ist. Um das Kennzeichenschild zu entfernen, muss der das Kennzeichenschild umlaufende Teil des Rahmens entfernt werden. Dabei werden mechanische Verbindungsmittel zwischen dem ersten und zweiten Teil des Kennzeichenrahmens zerstört, so dass der Rahmen im Anschluss nicht mehr zusammengesetzt werden kann, oder der das Kennzeichenschild umlaufende Teil des Rahmens bricht an Sollbruchstellen, was wiederrum die Antennenstruktur zerstört und so eine ordnungsgemäße Funktion des Elektronikmoduls unterbindet.

Aus der nachveröffentlichten EP 3 399 469 A1 ist ein funkelektronischer Kennzeichen-Identifikator bekannt. Durch einen isolierten Raum, der zwischen einem RFID-Tag in einem länglichen Rahmen eines Identifikators und einem Nummernschild definiert ist, um einen Resonanzhohlraum an einem Schlitz einer Metallfilmantenne auf dem RFID-Tag zu bilden, kann die Metallfilmantenne in Resonanz treten und ein elektromagnetisches Wellensignal erfassen, das von der Oberfläche des Nummernschilds durch den Resonanzhohlraum reflektiert wird. Das elektromagnetische Wellensignal eines Frequenzbandes wird unter der Wirkung des Frequenzbandes und der Feldmusteranpassung des Schlitzes und einer Rille an einen Radiofrequenz-Identifikationschip übertragen. Die Gesamtstruktur des Identifikators dient als Funkidentifikation für ein Fahrzeug. Die US 2010/0314454 A1 offenbart ein RFID-Tag mit einem Elektronik-Bauelement und einer Tag-Gehäusehalterung mit Befestigungspunkten zum Befestigen der Tag-Gehäusehalterung an einem Objekt, wobei der Elektronik-Bauelement-Einsatz so ausgelegt ist, dass er in einer Vielzahl der Tag-Gehäusehalterungen befestigt werden kann, wobei die Tag-Gehäusehalterungen unterschiedliche Konfigurationen der Befestigungspunkte zum Befestigen der Tag-Gehäusehalterungen an Objekten mit unterschiedlichen Formen aufweisen.

Anspruch 1 ist gegen diese Entgegenhaltung abgegrenzt.

Die DE 10 2007 027 539 A1 offenbart ein Transponderelement zur Verwendung an oder in einem metallischen Gegenstand für die berührungslose Übertragung von Daten, umfassend: ein Substrat; eine Antennenspule mit mindestens einer Spulenwindung auf einer Seite des Substrats; eine Kondensatorfläche eines zwei Kondensatorflächen erfordernden Kondensators auf derselben Seite des Substrats, wobei die Kondensatorfläche allein durch die Antennenspule gebildet sein kann; und einen Transponderchip, der gemeinsam mit der Antennenspule und der Kondensatorfläche einen funktionalen Teil für einen Transponder bildet. Von den zwei Kondensatorflächen, die der Kondensator erfordert, ist nur eine Kondensatorfläche Bestandteil des Transponderelements.

Vor diesem Hintergrund liegt der vorliegenden Erfindung die Aufgabe zugrunde, eine Anordnung aus einem Schild und einem das Schild ortsfest an einem Objekt tragenden Schildträger bereitzustellen, die es ermöglicht, das Objekt automatisch sicher zu identifizieren und hierbei die zuvor beschriebenen Nachteile überwindet. Außerdem soll eine unerlaubte Nutzung eines falschen bzw. gefälschten, zur Identifizierung des Objekts dienenden Schilds automatisch sicher detektierbar sein. Ferner soll die Anordnung einfach und kostengünstig herstellbar sein.

Diese Aufgabe wird durch eine Anordnung mit den Merkmalen des Anspruchs 1 gelöst. Weitere, besonders vorteilhafte Ausgestaltungen der Erfindung offenbaren die Unteransprüche.

Erfindungsgemäß sieht eine Anordnung aus einem Schild und einem das Schild ortsfest an einem Objekt, insbesondere einem bewegbaren Objekt, tragenden Schildträger vor, dass das Schild einen metallischen Schildkörper aufweist. Der Begriff Schildkörper ist weit auszulegen und kann jegliche metallische Strukturen beinhalten, die einen Teil des Schilds darstellen. So kann ein Schildkörper beispielsweise eine im Wesentlichen flächige, tragende metallische Struktur des Schilds sein, zum Beispiel ein flächiger Grundkörper des Schilds. Mit anderen Worten wäre ein derartiges Schild im Wesentlichen aus dem flächigen, metallischen Schild- bzw. Grundkörper gebildet. Ebenso kann als metallischer Schildkörper aber auch eine draht-, streifen- oder folienartige, metallische Struktur verstanden werden, die beispielsweise an einem ansonsten nicht metallischen Schild angebracht ist. So könnte das Schild in einem solchen Fall im Wesentlichen aus elektrisch nicht-leitendem Kunststoff (Grundkörper) gebildet sein, wobei der kunststoffartige Grundkörper des Schilds eine partielle draht-, steifen- oder folienartige lineare oder flächige Metallstruktur, nämlich den metallischen Schildkörper, aufweisen würde.

Die erfindungsgemäße Anordnung beinhaltet ferner einen an dem Schildträger befestigten, auf elektromagnetischem Wege berührungslos auslesbaren elektronischen Datenträger, der einen ersten Teil einer Antennenstruktur sowie eine über ein Anpassnetzwerk mit dem ersten Teil der Antennenstruktur wirkgekoppelte elektronische Steuer- und Speichereinheit aufweist. Als Wirkkopplung ist hierin eine informations- und energieübertragende Ankopplung zwischen der Steuer- und Speichereinheit und dem ersten Teil der Antennenstruktur zu verstehen, wobei das Anpassnetzwerk eine kapazitive, induktive oder galvanische Ankopplung zwischen dem ersten Teil der Antennenstruktur und der elektronischen Steuer- und Speichereinheit bereitstellt. Dementsprechend können unter einem Anpassnetzwerk im einfachsten Fall lediglich elektrische Leitungen/Leiterbahnen verstanden werden, jedoch auch komplexere Schaltungen mit ohmschen Widerständen, Kapazitäten und/oder Induktivitäten. Das Anpassnetzwerk dient in erster Linie der Anpassung, insbesondere Impedanzanpassung, der Steuer- und Speichereinheit an den ersten Teil der Antennenstruktur. Eine Informations- und/oder Energieübertragung kann ebenso von dem ersten Teil der Antennenstruktur hin zur elektronischen Steuer- und Speichereinheit erfolgen.

Die elektronische Steuereinheit kann eine einfache digitale Steuerschaltung sein, die ausgelegt ist, in der Speichereinheit gespeicherte Informationen aus dieser auszulesen und an den ersten Teil der Antennenstruktur zu übertragen und möglicherweise auch umgekehrt. Die Steuereinheit kann zur Realisierung komplexerer Aufgaben aber auch durch eine elektronische, vorzugsweise digitale, Prozessoreinheit, zum Beispiel durch einen Mikroprozessor, Mikrocontroller und dergleichen, gebildet sein.

Weiterhin bildet der metallische Schildkörper bei der erfindungsgemäßen Anordnung einen zweiten, zum ersten Teil der Antennenstruktur des Datenträgers komplementären Teil der Antennenstruktur. Der metallische Schildkörper ist hierbei durch die Anordnung des Schilds an dem dieses tragenden Schildträger derart zum ersten Teil der Antennenstruktur des Datenträgers positioniert, dass der erste und zweite Teil der Antennenstruktur miteinander wirkgekoppelt sind und eine resonante Gesamtantennenstruktur bezüglich eines mit dieser Gesamtantennenstruktur zu übertragenden Frequenzspektrums bilden. Auch in diesem Fall stellt die Wirkkopplung zwischen den beiden Teilen der Antennenstruktur insbesondere eine Energieübertragung mit dem Ziel einer elektromagnetischen Abstrahlung von der Gesamtantennenstruktur zur Informationsübertragung an einen entfernen Empfänger sicher. Wie bereits erwähnt, ist eine Energie- und Informationsübertragung auch in umgekehrter Richtung, das heißt von einem entfernten Sender zur Gesamtantennenstruktur, möglich.

Der vorliegenden Erfindung liegt mit anderen Worten die Idee zugrunde, eine resonante Gesamtantennenstruktur erst durch die gezielte Anordnung des Schilds bzw. des metallischen Schildkörpers am Schildträger zu schaffen. Diese Anordnung wird durch die das Schild in herkömmlicher Weise tragende Funktion des Schildträgers sichergestellt. Als resonante Gesamtantennenstruktur ist eine Antennenstruktur zu verstehen, die im gewünschten, zu übertragenden Frequenzbereich im Wesentlichen ein Maximum der Energieabstrahlung erzeugt, so dass die erzielbare Reichweite wesentlich, das heißt um Größenordnungen, größer ist als eine Reichweite einer nicht resonanten Antennenstruktur, wie sie beispielsweise der erste Teil der Antennenstruktur des Datenträgers alleine darstellt. Dementsprechend führt erst das Zusammenführen des am Schildträger angeordneten Datenträgers und des metallischen Schildkörpers des Schilds zur Möglichkeit einer elektromagnetischen Übertragung zwischen dem Datenträger und einem sich in großer Entfernung befindenden Empfänger und/oder Sender.

Eine mit der resonanten Gesamtantennenstruktur erzielbare Reichweite ist vorzugsweise größer als 1 m. So kann die erzielbare Reichweite beispielsweise etwa 2 m bis etwa 15 m betragen oder auch 2 m bis 6 m oder 10 m bis 15 m.

Da zwar der erste Teil der Antennenstruktur des Datenträgers alleine keine resonante Antennenstruktur im gewünschten zu übertragenden Frequenzbereich darstellt, lässt sich über diese aber dennoch in einem Nahbereich eine Energie- und Informationsübertragung zwischen einem entfernten Sender/Empfänger und dem Datenträger realisieren. Dieser Nahbereich beträgt vorzugsweise lediglich einige wenige Zentimeter, zum Beispiel etwa 1 cm bis 10 cm, kann jedoch je nach konkretem Anwendungsfall auch über 10 cm hinausgehen und zum Beispiel bis zu etwa 50 cm oder 1 m betragen oder sogar bis zu etwa 5 m betragen.

Folglich ist eine Antennenverstärkung der resonanten Gesamtantennenstruktur jedenfalls ein Mehrfaches größer (und damit die Reichweite) als eine Antennenverstärkung bzw. Reichweite des ersten Teils der Antennenstruktur des Datenträgers alleine. Bevorzugt ist die Reichweite der resonanten Gesamtantennenstruktur wenigstens um einen Faktor 2 größer als die Reichweite des ersten Teils der Antennenstruktur alleine, noch bevorzugter wenigstens um einen Faktor 5 größer und noch bevorzugter wenigstens um einen Faktor 10 größer.

Erfindungsgemäß ist vorgesehen, dass der Datenträger derart am Schildträger befestigt ist, dass ein gewaltsames Entfernen des Schildträgers vom Objekt die Funktion des Datenträgers irreversibel zerstört.

Die erfindungsgemäße Anordnung erlaubt das automatische Auslesen von Informationen aus dem elektronischen Datenträger, wobei die gespeicherten Informationen bevorzugt Identifizierungsinformationen, die eine auf dem Schild aufgebrachte (optische) Identifizierungsinformation und/oder Identifizierungsinformationen bezüglich des Objekts, an dem das Schild über den Schildträger angebracht ist, beinhalten. So lässt sich eine automatische Identifizierung des Schilds bzw. des Objekts durchführen. Ebenso lässt sich durch einen Vergleich beider Informationen die ordnungsgemäße Zuordnung des Schilds an dem Objekt überprüfen. Diese Zuordnung kann beispielsweise bei einer Registrierung des Objekts mit dem Schild erfolgen.

Beispielsweise kann ein Fahrzeug mit einem diesem zugeordneten Schild bzw. Kennzeichenschild mit eingeprägter Kennzeichenlegende registriert werden, wobei diese Informationen in dem elektronischen Datenträger elektronisch abgelegt werden. Zusätzlich können auch weitere Informationen über den Besitzer des Objekts und/oder über das Objekt selbst im Datenträger gespeichert werden. So lässt sich durch einen Vergleich der an dem Schild selbst dargestellten optischen Information (z. B. Kennzeichenlegende) mit der zuvor im elektronischen Datenträger gespeicherten Information vergleichen. Stimmen diese Informationen nicht überein, liegt eine unerlaubte (illegale) Nutzung des Schilds (z. B. Kennzeichenschild) am Objekt (z. B. Kraftfahrzeug) vor, die mit der vorliegenden Erfindung automatisch erkannt werden kann.

Da der elektronische Datenträger bewusst nicht im Schild integriert, sondern am Schildträger angebracht ist, kann das Objekt (z. B. Kraftfahrzeug) trotz fehlendem Schild (Kennzeichenschild) zusätzlich weiterhin identifiziert werden, sofern die entsprechenden Informationen im elektronischen Datenträger gespeichert sind. Das berührungslose Auslesen dieser Identifizierungsinformationen kann jedoch ohne Schild bzw. metallischen Schildkörper nur noch auf sehr kurze Entfernung durchgeführt werden, wie oben bereits beschrieben wurde. Dies kann beispielsweise von Ordnungskräften mit einer entsprechenden Leseeinrichtung im Bereich weniger Zentimeter Entfernung zum ersten Teil der Antennenstruktur des Datenträgers durchgeführt werden.

Ein weiterer besonderer Vorteil der vorliegenden Erfindung ist darin zu sehen, dass das Schild (z. B. Kennzeichenschild) in seiner herkömmlichen Struktur nicht verändert werden muss. So ist es zur Ausbildung der resonanten Gesamtantennenstruktur nicht erforderlich, in den metallischen Schildkörper zum Beispiel einen Schlitz zur Ausbildung einer Schlitzantenne mit den zuvor beschriebenen Nachteilen einzubringen. Dies ermöglicht, im Gegensatz zu herkömmlichen Lösungen mit in bzw. auf dem Schild angebrachten elektronischen Datenträgern, dass die Gestaltung und eine mögliche Personalisierung des Schilds von der Übertragungsfunktion des Datenträgers nicht beeinflusst oder gar beeinträchtigt wird, was nicht zuletzt die Herstellung der Anordnung erleichtert und kostengünstiger macht. Dabei ist die Lesereichweite der erfindungsgemäßen Lösung nicht gegenüber herkömmlichen Lösungen, wie zum Beispiel einem RFID-Windshield-Label, reduziert.

Die Wirkkopplung zwischen dem ersten und zweiten Teil der Antennenstruktur erfolgt gemäß einer vorteilhaften Ausgestaltung der Erfindung kapazitiv, induktiv oder galvanisch. Besonders bevorzugt ist eine kapazitive Wirkkopplung zwischen dem ersten Teil der Antennenstruktur des Datenträgers und dem metallischen Schildkörper des Schilds.

Gemäß einer weiteren vorteilhaften Ausgestaltung der Erfindung ist der erste Teil der Antennenstruktur als im Wesentlichen U-förmiger Teil einer halbierten Schleifenantenne ausgebildet, wobei die freien Enden beider U-Schenkel mit dem metallischen Schildkörper wirkgekoppelt sind, wenn das Schild vom Schildträger getragen ist. Die Wirkkopplung kann beispielsweise kapazitiv erfolgen. Der metallische Schildkörper bildet somit den auf dem Datenträger fehlenden Schleifenteil der Schleifenantenne. Der Schildkörper bzw. das Schild kann somit in seiner herkömmlichen Form, beispielsweise rechteckig mit geraden Kanten, ausgebildet sein, ohne dass eine besondere Formgebung des Schildkörpers, zum Beispiel in Form eines eingebrachten Schlitzes, zur Bereitstellung des fehlenden Schleifenteils und damit zur Ausbildung der resonanten Gesamtantennenstruktur erforderlich ist.

Es ist zu verstehen, dass neben einer U-förmigen Ausgestaltung des ersten Teils der Antennenstruktur auch von dieser abweichende Formgebungen wie zum Beispiel eine L-Form, eine I-Form und dergleichen denkbar sind, die ebenfalls von der vorliegenden Erfindung mit umfasst sind, sofern die hierin beschriebene gemeinsame Anordnung des ersten Teils der Antennenstruktur und des metallischen Schildkörpers zur resonanten Gesamtantennenstruktur im Sinne dieser Erfindung führen.

Eine weitere vorteilhafte Ausgestaltung der Erfindung sieht vor, dass der erste Teil der Antennenstruktur als im Wesentlichen linienförmige Groundplane-Antenne ausgebildet ist, die an einem ihrer beiden Enden eine flächige Metallstruktur aufweist, die mit dem metallischen Schildkörper wirkgekoppelt ist (z. B. kapazitiv), wenn das Schild vom Schildträger getragen ist. Hierbei ist eine Flächengröße der Metallstruktur ein Mehrfaches kleiner als eine Fläche des metallischen Schildkörpers. Das Flächenverhältnis zwischen der Metallstruktur (hierin nachstehend auch als Groundplane bezeichnet) und dem metallischen Schildkörper kann zum Beispiel 1/10 bis zu etwa 1/100 betragen. Entscheidend ist, dass die Groundplane in ihrer Flächengröße bezüglich der Fläche des metallischen Schildkörpers so klein gewählt ist, dass die Groundplane-Antenne alleine, das heißt ohne Schild bzw. metallischen Schildkörper, ihre Resonanz im gewünschten Frequenzbereich verliert und bei zum Beispiel kapazitiver Wirkkopplung mit dem Schild bzw. dem metallischen Schildkörper erneut resonant wird.

Die Antennenführung der Groundplane-Antenne ist hierbei nicht auf eine im Wesentlichen linienförmige Führung beschränkt, sondern kann auch eine andere Führung aufweisen, zum Beispiel kreisförmig oder spiralförmig gewickelt sein.

Die Groundplane-Antenne kann beispielsweise eine Wellenlänge lang sein oder auch zwei oder drei Wellenlängen, wodurch sich die Richtcharakteristik der Gesamtantennenstruktur in gewünschter Weise beeinflussen lässt.

Gemäß einer noch weiteren vorteilhaften Ausgestaltung der Erfindung ist der erste Teil der Antennenstruktur als invertierte F-Antenne ausgebildet, die eine flächige Metallstruktur aufweist, die mit dem metallischen Schildkörper wirkgekoppelt ist, wenn das Schild vom Schildträger getragen ist, wobei eine Flächengröße der Metallstruktur ein Mehrfaches (z. B. wenigstens um den Faktor 10) kleiner ist als eine Fläche des metallischen Schildkörpers. Auch bei dieser Ausgestaltung gilt das bereits zuvor Erläuterte hinsichtlich der Flächengröße und Resonanzwirkung der Metallstruktur.

Eine weitere vorteilhafte Ausgestaltung der Erfindung sieht vor, dass der Datenträger mehrere erste Teile der Antennenstruktur aufweist, die jeweils einzeln mit dem metallischen Schildkörper wirkgekoppelt sind und die resonante Gesamtantennenstruktur bilden, wenn das Schild vom Schildträger getragen ist, wobei die elektronische Steuer- und Speichereinheit mit jeweils jeder der mehreren ersten Teile der Antennenstruktur wirkgekoppelt ist. Mit anderen Worten sind die mehreren ersten Teile der Antennenstruktur mit der Steuer- und Speichereinheit parallel zusammengeschaltet. Auch hierdurch lässt sich insbesondere die Richtcharakteristik der Gesamtantennenstruktur in gewünschter Weise beeinflussen.

Besonders bevorzugt sind die mehreren ersten Teile der Antennenstruktur des Datenträgers identisch ausgebildet.

Eine noch weitere vorteilhafte Ausgestaltung der Erfindung sieht vor, dass das Anpassnetzwerk eine Koppelschleife (z. B. Leiterschleife) aufweist, über welche die Steuer- und Speichereinheit induktiv mit dem ersten Teil der Antennenstruktur wirkgekoppelt ist.

Weiterhin ist die Koppelschleife nach einer weiteren vorteilhaften Ausgestaltung der Erfindung entlang wenigstens eines Abschnitts des ersten Teils der Antennenstruktur verschiebbar. Hierdurch wird auf einfache Weise eine Speisepunktverschiebung entlang der Antennenstruktur ermöglicht, durch die sich beispielsweise die Impedanz des ersten Teils der Antennenstruktur an eine Impedanz der Steuer- und Speichereinheit anpassen lässt. Die Speisepunktverschiebung kann auch zur Anpassung an verschiedene zu übertragende Frequenzbereiche und/oder zur Anpassung an verschiedene Materialuntergründe des Datenträgers genutzt werden.

Nach einer noch weiteren bevorzugten Ausgestaltung der Erfindung ist die Steuer- und Speichereinheit ein RFID-Chip, insbesondere ein UHF-RFID-Chip, und die resonante Gesamtantennenstruktur ist zur Übertragung eines UHF-Frequenzspektrums ausgebildet. Der UHF-Frequenzbereich beinhaltet den Bereich zwischen etwa 850 MHz und etwa 954 MHz, wobei beispielsweise in Europa und Südafrika im Wesentlichen die Frequenzen 865-868 MHz, in USA 902-928 Mhz, in Korea 910-914 MHz, China und Australien 920-926 MHz und in Japan 952-954 MHz Verwendung finden. Dies erlaubt die Erzielung einer Reichweite der resonanten Gesamtantennenstruktur im Bereich größer 1 m bis etwa 15 m.

Die Gesamtantennenstruktur kann für den gesamten UHF-Frequenzbereich ausgelegt sein (breitbandige Lösung). In besonderen Ausführungsformen kann die Auslegung der Gesamtantennenstruktur zur Erzielung besserer Lesereichweiten auch lediglich für Teilbereiche des UHF-Frequenzbands optimiert sein (schmalbandige Lösung).

Weiterhin bevorzugt ist der RFID-Chip ein passiver RFID-Chip. Aktive RFID-Chips können jedoch ebenso Verwendung finden, erfordern jedoch eine eigene Energieversorgung.

Gemäß einer weiteren vorteilhaften Ausgestaltung der Erfindung weist der Datenträger ein elektrisch isolierendes Substrat auf, auf dem der erste Teil der Antennenstruktur, die Steuer- und Speichereinheit und das Anpassnetzwerk angeordnet sind. In vorteilhafter Weise sind hierbei die Steuer- und Speichereinheit und das Anpassnetzwerk auf einer ersten Seite des Substrats angeordnet und der erste Teil der Antennenstruktur auf einer der ersten Seite gegenüberliegenden zweiten Seite angeordnet. Auf diese Weise lässt sich in einfacher baulicher Weise eine induktive oder kapazitive Kopplung der Steuer- und Speichereinheit an den ersten Teil der Antennenstruktur realisieren, wobei das Substrat das Anpassnetzwerk elektrisch von dem ersten Teil der Antennenstruktur des Datenträgers isoliert. Zudem bildet das Substrat einen mechanisch stabilen Materialgrund zur Anordnung der vorstehend beschriebenen Komponenten. Alternativ ist es auch möglich, dass der erste Teil der Antennenstruktur auf einem weiteren, separaten Substrat angeordnet ist.

Bevorzugt weist das Substrat eine Dielektrizitätszahl im Bereich zwischen etwa 4 und etwa 80 auf, wodurch sich eine wirksame induktive/kapazitive Kopplung zwischen dem Anpassnetzwerk und dem ersten Teil der Antennenstruktur des Datenträgers realisieren lässt.

Gemäß einer noch weiteren vorteilhaften Ausgestaltung der Erfindung ist der Datenträger von einem Gehäuse umschlossen. Der Datenträger kann von dem Gehäuse auch hermetisch abgeschlossen sein. Das Gehäuse schützt den Datenträger in erster Linie vor Witterungseinflüssen und stellt eine lange Lebensdauer des Datenträgers sicher.

Bevorzugt ist das Gehäuse aus einem Material mit einer Dielektrizitätszahl im Bereich zwischen etwa 1 und etwa 5 gebildet, um einen Einfluss des Gehäuses auf die Wirkkopplung zwischen dem ersten Teil der Antennenstruktur des Datenträgers und dem metallischen Schildkörper gering zu halten.

Das Gehäuse kann in weiterer bevorzugter Ausgestaltung der Erfindung vom Schildträger selbst gebildet sein, so dass auf ein zusätzliches Gehäuse verzichtet werden kann.

Wenn zum Beispiel das Schild ein Kennzeichenschild ist, insbesondere ein Kraftfahrzeug-Kennzeichenschild mit eingeprägter Kennzeichenlegende, und der Schildträger ein am Objekt, in diesem Fall ein Kraftfahrzeug, anbringbarer Kennzeichenhalter ist, kann der Kennzeichenhalter als das Kennzeichenschild umgebender Rahmen ausgebildet sein, wobei der Kennzeichenrahmen in vorteilhafter Weise gleichzeitig auch das Gehäuse des elektronischen Datenträgers bildet. Der Kennzeichenhalter kann beispielsweise aus Kunststoff mit den zuvor erwähnten Eigenschaften hergestellt sein.

Es ist zu erwähnen, dass das Schild gemäß der vorliegenden Erfindung, insbesondere ein Kennzeichenschild für Kraftfahrzeuge, auch so genannte ePlates, also zum Beispiel KFZ-Kennzeichenschilder mit elektronischem Display, mit umfasst.

Um auch die Funktionalität des ersten Teils der Antennenstruktur nach einer unerlaubten Entfernung des Schilds vom Schildträger vollständig zu unterbinden, kann der Datenträger nach dem Anordnen des Schilds am Schildträger über eine nicht zerstörungsfrei lösbare mechanische Verbindung mit dem Schild verbunden sein, wobei ein gewaltsames Entfernen des Schilds vom Schildträger (z. B. Abreißen) die Funktion des Datenträgers irreversibel zerstört. Beispielsweise kann diese mechanische Verbindung eine nicht zerstörungsfrei lösbare Klips-Verbindung (formschlüssig) oder eine Klebeverbindung (stoffschlüssig) sein. Da der Datenträger in erster Linie an dem Schildträger befestigt ist, zerstört das unerlaubte Entfernen des Schilds vom Schildträger aufgrund der zusätzlichen mechanischen Verbindung des Datenträgers mit dem Schild den Datenträger in der Weise, dass beispielsweise funktionswichtige Teilkomponenten des Datenträgers, zum Beispiel die Steuereinheit, das Anpassnetzwerk, der erste Teil der Antennenstruktur, eine dünne Leitung/Leiterbahn und dergleichen, ebenfalls abgerissen bzw. irreversibel getrennt/unterbrochen werden.

Wie eingangs erwähnt, ist der Datenträger erfindungsgemäß derart am Schildträger befestigt, dass ein gewaltsames Entfernen (z. B. Abreißen) des Schildträgers vom Objekt die Funktion des Datenträgers irreversibel zerstört. Auch hierbei können funktionswichtige Teilkomponenten des Datenträgers, wie sie vorstehend erwähnt wurden, ebenfalls abgerissen, irreversibel getrennt oder unterbrochen werden. Die mechanische Verbindung zwischen dem Schildträger und dem Objekt kann zum Beispiel durch Verschraubung, Kleben oder nicht zerstörungsfrei lösbare Klips-Verbindungen und dergleichen realisiert sein. Ist der Schildträger am Objekt angeschraubt, können die Schrauben nach dem Einsetzen des Schilds im Schildträger von dem Schild verdeckt sein, wobei das Schild dann in vorteilhafter Weise ebenfalls nicht mehr zerstörungsfrei vom Schildträger entfernbar ist.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: eine Ausschnittansicht eines Ausführungsbeispiels einer Anordnung aus einem Schild und einem Schildträger gemäß der Erfindung,
- Fig. 2: eine Ausschnittansicht eines weiteren Ausführungsbeispiels einer Anordnung aus einem Schild und einem Schildträger gemäß der Erfindung,
- Fig. 3: eine Ausschnittansicht eines noch weiteren Ausführungsbeispiels einer Anordnung aus einem Schild und einem Schildträger gemäß der Erfindung,
- Fig. 4: eine Ausschnittansicht eines noch weiteren Ausführungsbeispiels einer Anordnung aus einem Schild und einem Schildträger gemäß der Erfindung,
- Fig. 5: eine Ausschnittansicht eines noch weiteren Ausführungsbeispiels einer Anordnung aus einem Schild und einem Schildträger gemäß der Erfindung und
- Fig. 6: eine Ausschnittansicht eines noch weiteren Ausführungsbeispiels einer Anordnung aus einem Schild und einem Schildträger gemäß der Erfindung.

In den unterschiedlichen Figuren sind hinsichtlich ihrer Funktion gleichwertige Teile stets mit denselben Bezugszeichen versehen, so dass diese in der Regel auch nur einmal beschrieben werden.

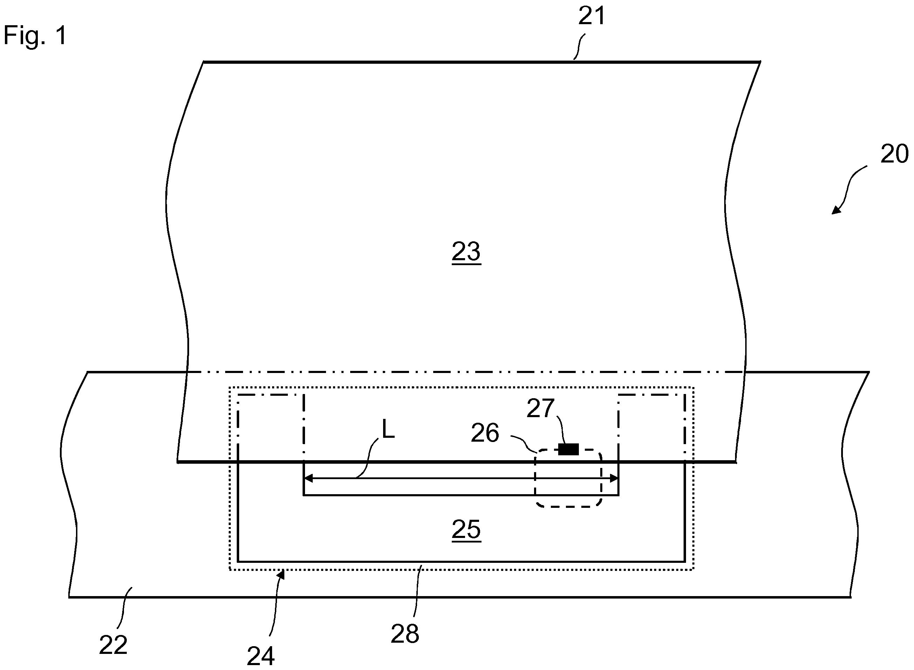

Fig. 1 stellt schematisch eine Ausschnittansicht eines Ausführungsbeispiels einer Anordnung 20 aus einem Schild 21 und einem Schildträger 22 gemäß der Erfindung dar. Bei dem in Fig. 1 gezeigten Schild 21 handelt es sich beispielhaft um ein Kraftfahrzeug-Kennzeichenschild, das in einem als Schildträger 22 fungierenden Kennzeichenrahmen an einem Objekt, insbesondere einem bewegbaren Objekt, in diesem Fall an einem Kraftfahrzeug (nicht dargestellt), gehalten ist. Obwohl in Fig. 1 nicht explizit dargestellt, ist in das Schild 21 eine Kennzeichenlegende in herkömmlicher Weise eingeprägt.

Das Schild 21 weist einen flächigen, metallischen Schildkörper 23 auf, wobei der metallische Schildkörper 23 in dem in Fig. 1 dargestellten Fall die tragende mechanische Struktur des Schilds 21, das heißt seinen Grundkörper, bildet. Es ist zu verstehen, dass auf dem Schildkörper 23 weitere, zum Beispiel folienartige Strukturen wie reflektierende Folien und dergleichen, angebracht sein können.

Des Weiteren ist Fig. 1 zu entnehmen, dass an dem Schildträger 22 ein auf elektromagnetischem Wege berührungslos auslesbarer elektronischer Datenträger 24 befestigt ist, der einen ersten Teil 25 einer Antennenstruktur sowie eine über ein Anpassnetzwerk 26 mit dem ersten Teil 25 der Antennenstruktur wirkgekoppelte elektronische Steuer- und Speichereinheit 27 aufweist.

Wie Fig. 1 weiter zu entnehmen ist, bildet der metallische Schildkörper 23 einen zweiten, zum ersten Teil 25 der Antennenstruktur komplementären Teil der Antennenstruktur, der durch die Anordnung des Schilds 21 an dem dieses tragenden Schildträger 22 derart zum ersten Teil 25 der Antennenstruktur des Datenträgers 24 positioniert ist, dass der erste 25 und zweite Teil 23 der Antennenstruktur miteinander wirkgekoppelt sind und eine resonante Gesamtantennenstruktur 23, 25 bezüglich eines mit dieser Gesamtantennenstruktur 23, 25 zu übertragenden Frequenzspektrums bilden.

In Fig. 1 ist weiterhin deutlich dargestellt, dass bei dem Ausführungsbeispiel der Anordnung 20 der erste Teil 25 der Antennenstruktur als im Wesentlichen U-förmiger Teil einer halbierten Schleifenantenne 25 ausgebildet ist, wobei die freien Enden beider U-Schenkel mit dem metallischen Schildkörper 23 in der dargestellten Anordnung, in der das Schild 21 vom Schildträger 22 getragen ist, wirkgekoppelt sind. Bei dem Ausführungsbeispiel der Anordnung 20 ist der U-förmig halbierte Teil der Schleifenantenne 25 mit dem metallischen Schildkörper 23 kapazitiv wirkgekoppelt, indem sich die freien Enden der beiden U-Schenkel der Antennenstruktur 25 jeweils bereichsweise unterhalb des metallischen Schildkörpers 23 erstrecken, wobei sie, wenn vorzugsweise auch nur mit sehr geringem Abstand (bevorzugt 1 mm oder kleiner), von diesem elektrisch isoliert sind.

In Fig. 1 ist zu erkennen, dass erst durch die Anordnung des Schilds 21 am Schildträger 22 die resonante Gesamtantennenstruktur 23, 25 in Form einer geschlossenen, resonanten Schleifenantenne mit der bereits weiter oben beschriebenen hohen Antennenverstärkung im Vergleich zur eher sehr geringen Antennenverstärkung des ersten Teils 25 der Antennenstruktur des Datenträgers 24 alleine entsteht.

Wie der Fig. 1 weiter zu entnehmen ist, weist das Anpassnetzwerk 26 bei dem dargestellten Ausführungsbeispiel der Anordnung 20 eine Koppelschleife auf, über welche die Steuer- und Speichereinheit 27 induktiv mit dem ersten Teil 25 der Antennenstruktur des Datenträgers 24 wirkgekoppelt ist. Mit anderen Worten ist die Steuer- und Speichereinheit 27 der dargestellten Anordnung induktiv mit dem ersten Teil 25 der Antennenstruktur schwach wirkgekoppelt und mit der Gesamtantennenstruktur 23, 25 stark wirkgekoppelt. Für eine vorteilhafte Impedanzanpassung der Steuer- und Speichereinheit 27 an den ersten Teil 25 der Antennenstruktur des Datenträgers 24 ist die Koppelschleife 26 bezüglich einer Längserstreckung L der Gesamtantennenstruktur 23, 25 außermittig angeordnet, in der Darstellung der Fig. 1 entsprechend näher zum rechten freien Ende der Antennenstruktur 25 angeordnet als zu ihrem linken freien Ende.

Des Weiteren ist bei der in Fig. 1 dargestellten Anordnung 20 die Steuer- und Speichereinheit 27 als RFID-Chip ausgebildet, insbesondere als passiver UHF-RFID-Chip. Dementsprechend ist auch die resonante Gesamtantennenstruktur 23, 25 zur Übertragung eines UHF-Frequenzspektrums, zum Beispiel im Bereich zwischen vorzugsweise 850 MHz bis 950 MHz, noch bevorzugter im Bereich zwischen 865 MHz bis 869 MHz, ausgebildet und ausgelegt. Wenn beispielsweise ein resonanter gestreckter Dipol bei einer Mittenfrequenz von z. B. 866,5 MHz eine Länge von etwa 173 mm aufweist, könnte auch die durch den U-förmigen Teil 25 der Schleifenantenne und dem metallischen Schildkörper 23 gebildete mittige Aussparung der Gesamtantennenstruktur 23, 25 (Schleifenantenne) eine Längserstreckung L von diesem Wert aufweisen.

Weiterhin weist der Datenträger 24 der Anordnung 20 ein elektrisch isolierendes Substrat 28 auf, auf dem der erste Teil 25 der Antennenstruktur, die Steuer- und Speichereinheit 27 und das Anpassnetzwerk 26 angeordnet sind, wobei die Steuer- und Speichereinheit 27 und das Anpassnetzwerk 26 auf einer ersten Seite des Substrats 28, zum Beispiel einer Unterseite, angeordnet sind und der erste Teil 25 der Antennenstruktur auf einer der ersten Seite gegenüberliegenden zweiten Seite, zum Beispiel einer Oberseite, angeordnet ist. Das Substrat 28 weist vorzugsweise eine Dielektrizitätszahl im Bereich von etwa 4 bis etwa 80 auf. Das Substrat 28 bildet bei der Anordnung 20 außerdem den mechanischen Grundkörper des Datenträgers 24.

Ferner ist der Datenträger 24 bei der Anordnung 20 von einem Gehäuse (nicht dargestellt) umschlossen, das von dem Schildträger 22 gebildet ist. Das Gehäuse ist aus einem Material, beispielsweise Kunststoff, hergestellt, das eine Dielektrizitätszahl vorzugsweise im Bereich zwischen etwa 1 und 5 aufweist.

Es ist zu verstehen, dass bei der in Fig. 1 dargestellten beispielhaften Anordnung 20 der Schildträger 22 das Schild 21 rahmenartig umfasst.

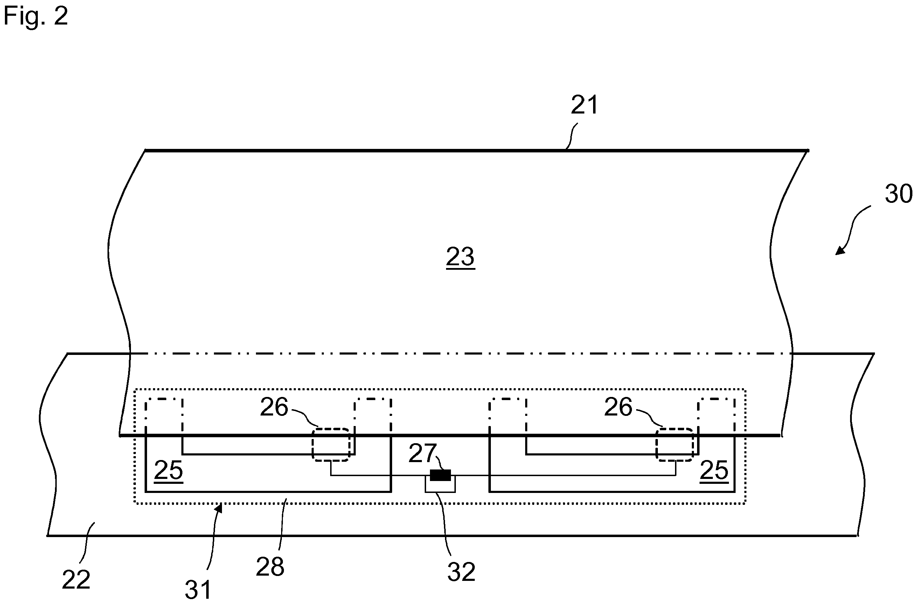

Fig. 2 stellt schematisch eine Ausschnittansicht eines weiteren Ausführungsbeispiels einer Anordnung 30 aus einem Schild 21 und einem Schildträger 22 gemäß der Erfindung dar. Der wesentliche Unterschied zur Anordnung 20 aus Fig. 1 besteht darin, dass die Anordnung 30 einen elektronischen Datenträger 31 aufweist, der zwei identische erste Teile 25 einer Antennenstruktur aufweist, die jeweils einzeln mit dem metallischen Schildkörper 23 (hier kapazitiv) wirkgekoppelt sind und die resonante Gesamtantennenstruktur 23, 25 bilden, wenn das Schild 21 vom Schildträger 22 getragen ist. Wie Fig. 2 zu entnehmen ist, ist die einzige elektronische Steuer- und Speichereinheit 27 (hier RFID-Chip) über ein jeweiliges Anpassnetzwerk 26 in Form einer induktiv wirkenden Koppelschleife mit jeweils jeder der zwei ersten Teile 25 der Antennenstruktur wirkgekoppelt. Außerdem beinhaltet der Datenträger 31 einen in Fig. 2 mit 32 gekennzeichneten weiteren Teil des Anpassnetzwerks, dessen einzelne Komponenten nicht näher dargestellt sind und beispielsweise weitere Kapazitäten und/oder weitere Induktivitäten und/oder ohmsche Widerstände beinhalten können. Die zwei ersten Teile 25 der Antennenstruktur des Datenträgers 31 sind ansonsten jeweils identisch aufgebaut wie der erste Teil 25 der Antennenstruktur des Datenträgers 24 der Anordnung 20 aus Fig. 1.

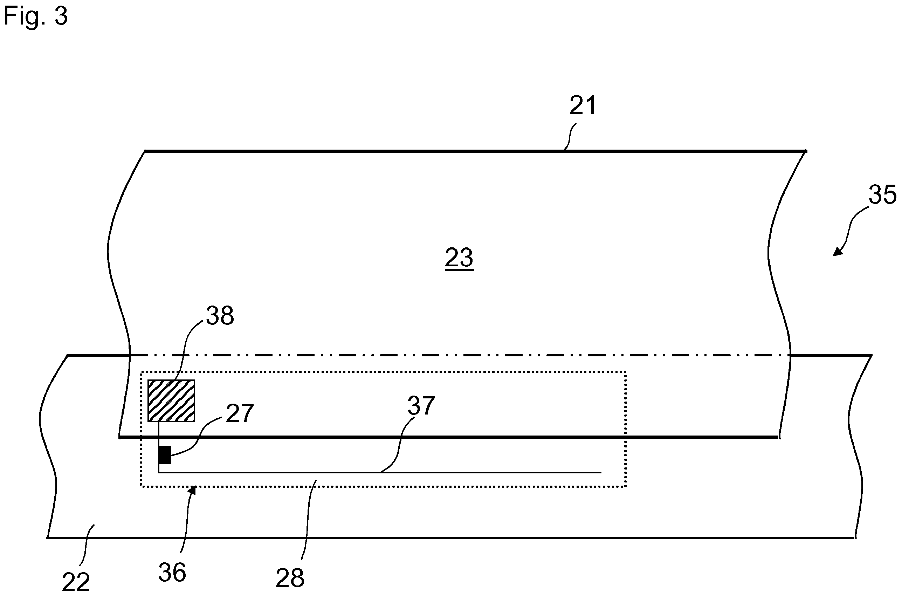

Fig. 3 stellt schematisch eine Ausschnittansicht eines noch weiteren Ausführungsbeispiels einer Anordnung 35 aus einem Schild 21 und einem Schildträger 22 gemäß der Erfindung dar. Im Unterschied zur Anordnung 20 aus Fig. 1 weist die Anordnung 35 einen elektronischen Datenträger 36 auf, auf welchem der erste Teil der Antennenstruktur als im Wesentlichen linienförmige Groundplane-Antenne 37 ausgebildet ist. Die Groundplane-Antenne 37 weist an einem ihrer beiden Enden eine flächige Metallstruktur 38 auf, die auch als Groundplane bezeichnet wird. Wie in Fig. 3 deutlich zu erkennen ist, ist die Groundplane 38 mit dem metallischen Schildkörper 23 (hier kapazitiv) wirkgekoppelt, wenn das Schild 21 vom Schildträger 22 getragen ist. Ferner ist zu erkennen, dass eine Flächengröße der Metallstruktur 38 ein Mehrfaches kleiner ist (z. B. wenigstens um den Faktor 10) als eine Fläche des gesamten metallischen Schildkörpers 23. Die Ankopplung der Steuer- und Speichereinheit 27 an die Groundplane-Antenne 37 erfolgt in dem dargestellten Fall galvanisch, so dass das Anpassnetzwerk an sich in Fig. 3 nicht explizit gekennzeichnet ist.

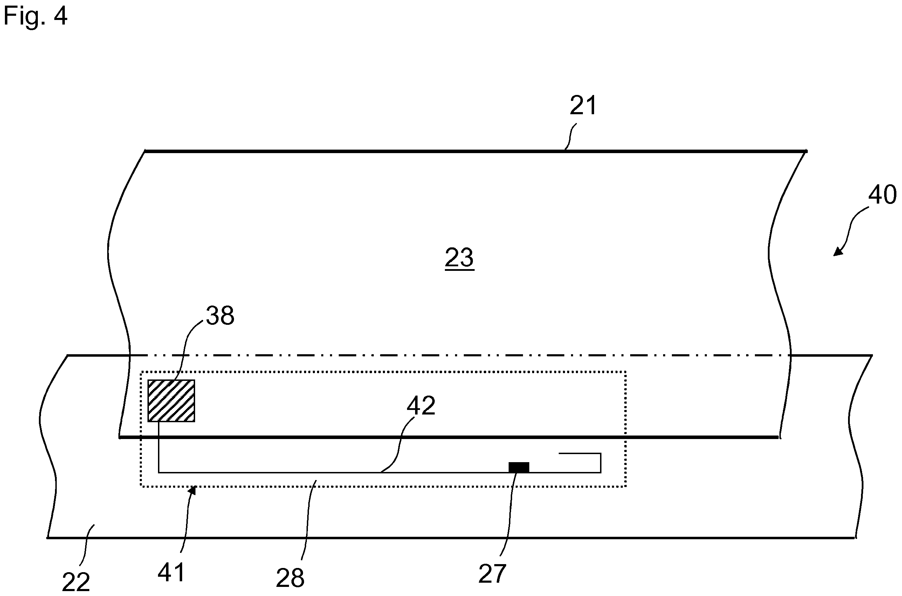

Fig. 4 stellt schematisch eine Ausschnittansicht eines noch weiteren Ausführungsbeispiels einer Anordnung 40 aus einem Schild 21 und einem Schildträger 22 gemäß der Erfindung dar. Im Unterschied zur Anordnung 35 aus Fig. 3 weist ein elektronischer Datenträger 41 der Anordnung 40 eine Groundplane-Antenne 42 als ersten Teil einer Antennenstruktur auf, deren Antennenführung lediglich abschnittsweise linienförmig ist, ansonsten jedoch auch andersartig ausgeführt sein kann, wie es in Fig. 4 angedeutet ist. Außerdem ist bei dem Datenträger 41 der Anordnung 40 die Steuer- und Speichereinheit 27 aus Gründen einer anderen Impedanzanpassung im Vergleich zur Groundplane-Antenne 37 der Anordnung 35 an die Groundplane-Antenne 42 beispielhaft an einer anderen Stelle der Groundplane-Antenne 42 galvanisch an diese angekoppelt.

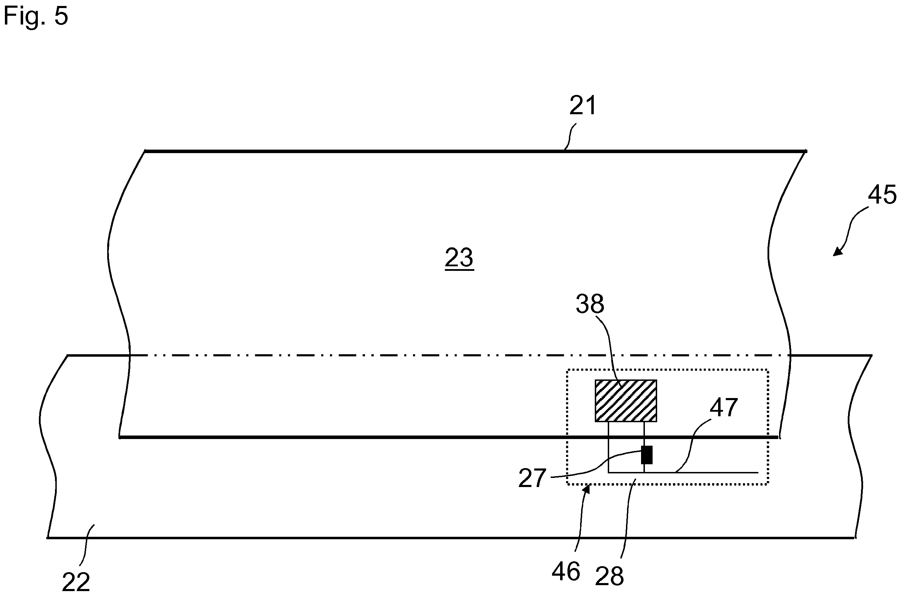

Fig. 5 stellt schematisch eine Ausschnittansicht eines noch weiteren Ausführungsbeispiels einer Anordnung 45 aus einem Schild 21 und einem Schildträger 22 gemäß der Erfindung dar. Im Unterschied zur Anordnung 20 aus Fig. 1 weist die Anordnung 45 einen elektronischen Datenträger 46 auf, auf welchem der erste Teil der Antennenstruktur als invertierte F-Antenne 47 (auch als IFA bezeichnet) ausgebildet ist. Die invertierte F-Antenne 47 weist eine flächige Metallstruktur 38 auf, die ebenfalls als Groundplane bezeichnet werden kann. Wie Fig. 4 deutlich zu entnehmen ist, ist die Groundplane 38 mit dem metallischen Schildkörper 23 (hier kapazitiv) wirkgekoppelt, wenn das Schild 21 vom Schildträger 22 getragen ist. Ferner ist zu erkennen, dass eine Flächengröße der Metallstruktur 38 ein Mehrfaches kleiner ist (z. B. wenigstens um den Faktor 10) als eine Fläche des gesamten metallischen Schildkörpers 23. Die Ankopplung der Steuer- und Speichereinheit 27 an die IFA 47 erfolgt in dem dargestellten Fall galvanisch, so dass das Anpassnetzwerk an sich in Fig. 5 nicht explizit gekennzeichnet ist.

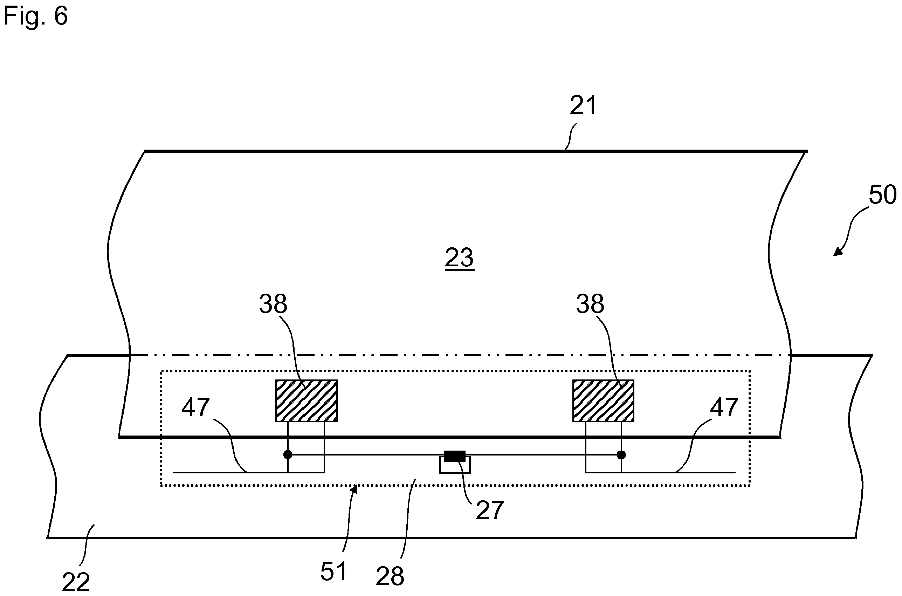

Fig. 6 stellt schematisch eine Ausschnittansicht eines noch weiteren Ausführungsbeispiels einer Anordnung 50 aus einem Schild 21 und einem Schildträger 22 gemäß der Erfindung dar. Der wesentliche Unterschied zur Anordnung 45 aus Fig. 5 besteht darin, dass die Anordnung 50 einen elektronischen Datenträger 51 aufweist, der zwei erste Teile 47 einer Antennenstruktur (hier in Form jeweils einer IFA) aufweist, die jeweils einzeln mit dem metallischen Schildkörper 23 (hier kapazitiv) wirkgekoppelt sind und die resonante Gesamtantennenstruktur 23, 47 bilden, wenn das Schild 21 vom Schildträger 22 getragen ist. Wie Fig. 6 zu entnehmen ist, ist die einzige elektronische Steuer- und Speichereinheit 27 (hier RFID-Chip) jeweils galvanisch mit jedem der zwei ersten Teile 47 der Antennenstruktur des Datenträgers 51 wirkgekoppelt. Die zwei ersten Teile 47 der Antennenstruktur des Datenträgers 51 sind jeweils im Wesentlichen identisch aufgebaut wie der erste Teil 47 der Antennenstruktur des Datenträgers 46 der Anordnung 45 aus Fig. 5.

Die hierin offenbarte erfindungsgemäße Anordnung aus einem Schild und einem das Schild ortsfest an einem Objekt tragenden Schildträger ist nicht auf die hierin offenbarten Ausführungsformen beschränkt, sondern umfasst auch gleich wirkende weitere Ausführungsformen, die sich aus technisch sinnvollen weiteren Kombinationen der hierin beschriebenen Merkmale der erfindungsgemäßen Anordnung ergeben.

In bevorzugter Ausführung wird die erfindungsgemäße Anordnung für an einem Fahrzeug mittels eines Kennzeichenhalters befestigte Kennzeichenschilder verwendet.

### Bezugszeichenliste

- 20: Anordnung
- 21: Schild
- 22: Schildträger
- 23: Metallischer Schildkörper
- 24: Elektronischer Datenträger
- 25: Erster Teil einer Antennenstruktur; U-förmige, halbierte Schleifenantenne
- 26: Anpassnetzwerk, Koppelschleife
- 27: Steuer- und Speichereinheit, RFID-Chip
- 28: Substrat
- 30: Anordnung
- 31: Elektronischer Datenträger
- 32: Anpassnetzwerk
- 35: Anordnung
- 36: Elektronischer Datenträger
- 37: Groundplane-Antenne
- 38: Flächige Metallstruktur, Groundplane
- 40: Anordnung
- 41: Elektronischer Datenträger
- 42: Groundplane-Antenne
- 45: Anordnung
- 46: Elektronischer Datenträger
- 47: Invertierte F-Antenne (IFA)
- 50: Anordnung
- 51: Elektronischer Datenträger
- L: Längserstreckung

## Patentansprüche

1. Anordnung aus einem Schild (21) und einem das Schild (21) ortsfest an einem Objekt tragenden Schildträger (22),
wobei das Schild (21) einen metallischen Schildkörper (23) aufweist und an dem Schildträger (22) ein auf elektromagnetischem Wege berührungslos auslesbarer elektronischer Datenträger (24, 31, 36, 41, 46, 51) befestigt ist, der einen ersten Teil (25, 37, 42, 47) einer Antennenstruktur sowie eine über ein Anpassnetzwerk (26, 32) mit dem ersten Teil (25, 37, 42, 47) der Antennenstruktur wirkgekoppelte elektronische Steuer- und Speichereinheit (27) aufweist,
**dadurch gekennzeichnet, dass**
der metallische Schildkörper (23) einen zweiten, zum ersten Teil (25, 37, 42, 47) der Antennenstruktur komplementären Teil der Antennenstruktur bildet, der durch die Anordnung des Schilds (21) an dem dieses tragenden Schildträger (22) derart zum ersten Teil (25, 37, 42, 47) der Antennenstruktur des Datenträgers (24, 31, 36, 41, 46, 51) positioniert ist, dass der erste (25, 37, 42, 47) und zweite Teil (23) der Antennenstruktur miteinander wirkgekoppelt sind und eine resonante Gesamtantennenstruktur (23, 25, 37, 42, 47) bezüglich eines mit dieser Gesamtantennenstruktur (23, 25, 37, 42, 47) zu übertragenden Frequenzspektrums bilden,
wobei die Wirkkopplung zwischen dem ersten (25, 37, 42, 47) und zweiten Teil (23) der Antennenstruktur kapazitiv, induktiv oder galvanisch erfolgt.

2. Anordnung nach Anspruch 1,
**dadurch gekennzeichnet, dass**
der erste Teil der Antennenstruktur als im Wesentlichen U-förmiger Teil (25) einer halbierten Schleifenantenne ausgebildet ist, wobei die freien Enden beider U-Schenkel mit dem metallischen Schildkörper (23) wirkgekoppelt sind, wenn das Schild (21) vom Schildträger (22) getragen ist.

3. Anordnung nach Anspruch 1,
**dadurch gekennzeichnet, dass**
der erste Teil der Antennenstruktur als im Wesentlichen linienförmige Groundplane-Antenne (37, 42) ausgebildet ist, die an einem ihrer beiden Enden eine flächige Metallstruktur (38) aufweist, die mit dem metallischen Schildkörper (23) wirkgekoppelt ist, wenn das Schild (21) vom Schildträger (22) getragen ist, wobei eine Flächengröße der Metallstruktur (38) ein Mehrfaches kleiner ist als eine Fläche des metallischen Schildkörpers (23).

4. Anordnung nach Anspruch 1,
**dadurch gekennzeichnet, dass**
der erste Teil der Antennenstruktur als invertierte F-Antenne (47) ausgebildet ist, die eine flächige Metallstruktur (38) aufweist, die mit dem metallischen Schildkörper (23) wirkgekoppelt ist, wenn das Schild (21) vom Schildträger (22) getragen ist, wobei eine Flächengröße der Metallstruktur (38) ein Mehrfaches kleiner ist als eine Fläche des metallischen Schildkörpers (23).

5. Anordnung nach einem der vorhergehenden Ansprüche,
**dadurch gekennzeichnet, dass**
der Datenträger (31, 51) mehrere erste Teile (25, 47) der Antennenstruktur aufweist, die jeweils einzeln mit dem metallischen Schildkörper (23) wirkgekoppelt sind und die resonante Gesamtantennenstruktur (23, 25, 47) bilden, wenn das Schild (21) vom Schildträger (22) getragen ist, wobei die elektronische Steuer- und Speichereinheit (27) mit jeweils jedem der mehreren ersten Teile (25, 47) der Antennenstruktur wirkgekoppelt ist.

6. Anordnung nach einem der vorhergehenden Ansprüche,
**dadurch gekennzeichnet, dass**
das Anpassnetzwerk eine Koppelschleife (26) aufweist, über welche die Steuer- und Speichereinheit (27) induktiv mit dem ersten Teil (25) der Antennenstruktur wirkgekoppelt ist.

7. Anordnung nach dem vorhergehenden Anspruch,
**dadurch gekennzeichnet, dass**
die Koppelschleife (26) entlang wenigstens eines Abschnitts des ersten Teils (25) der Antennenstruktur verschiebbar ist.

8. Anordnung nach einem der vorhergehenden Ansprüche,
**dadurch gekennzeichnet, dass**
der Datenträger (24, 31, 36, 41, 46, 51) ein elektrisch isolierendes Substrat (28) aufweist, auf dem der erste Teil (25, 37, 42, 47) der Antennenstruktur, die Steuer- und Speichereinheit (27) und das Anpassnetzwerk (26, 32) angeordnet sind, wobei die Steuer- und Speichereinheit (27) und das Anpassnetzwerk (26, 32) auf einer ersten Seite des Substrats (28) angeordnet sind und der erste Teil (25, 37, 42, 47) der Antennenstruktur auf einer der ersten Seite gegenüberliegenden zweiten Seite angeordnet ist.

9. Anordnung nach dem vorhergehenden Anspruch,
**dadurch gekennzeichnet, dass**
das Substrat (28) eine Dielektrizitätszahl im Bereich zwischen 4 und 80 aufweist.

10. Anordnung nach einem der vorhergehenden Ansprüche,
**dadurch gekennzeichnet, dass**
der Datenträger (24, 31, 36, 41, 46, 51) von einem Gehäuse umschlossen ist.

11. Anordnung nach dem vorhergehenden Anspruch,
**dadurch gekennzeichnet, dass**
das Gehäuse aus einem Material mit einer Dielektrizitätszahl im Bereich zwischen 1 und 5 gebildet ist.

12. Anordnung nach einem der beiden vorhergehenden Ansprüche,
**dadurch gekennzeichnet, dass**
das Gehäuse vom Schildträger (22) gebildet ist.

13. Anordnung nach einem der vorhergehenden Ansprüche,
**dadurch gekennzeichnet, dass**
der Datenträger (24, 31, 36, 41, 46, 51) derart am Schildträger (22) befestigt ist, dass ein gewaltsames Entfernen des Schildträgers (22) vom Objekt die Funktion des Datenträgers (24, 31, 36, 41, 46, 51) irreversibel zerstört.

14. Anordnung nach einem der vorhergehenden Ansprüche,
**dadurch gekennzeichnet, dass**
der Datenträger (24, 31, 36, 41, 46, 51) nach dem Anordnen des Schilds (21) am Schildträger (22) über eine nicht zerstörungsfrei lösbare mechanische Verbindung mit dem Schild (21) verbunden ist, wobei ein gewaltsames Entfernen des Schilds (21) vom Schildträger (22) die Funktion des Datenträgers (24, 31, 36, 41, 46, 51) irreversibel zerstört.

## Claims

1. Arrangement of a plate (21) and a plate support (22) carrying the plate (21) at a fixed position on an object, wherein the plate (21) has a metal plate body (23) and an electronic data carrier (24, 31, 36, 41, 46, 51), which can be read contactlessly by electromagnetic means, is mounted on the plate support (22), the data carrier having a first part (25, 37, 42, 47) of an antenna structure and an electronic control and memory unit (27) actively connected via a matching network (26, 32) to the first part (25, 37, 42, 47) of the antenna structure,
**characterized in that**
the metallic plate body (23) forms a second part of the antenna structure complementary to the first part (25, 37, 42, 47) of the antenna structure, which second part is positioned, as a result of the arrangement of the plate (21) on the plate support (22) carrying it, in such a manner relative to the first part (25, 37, 42, 47) of the antenna structure of the data carrier (24, 31, 36, 41, 46, 51) that the first (25, 37, 42, 47) and second part (23) of the antenna structure are actively coupled to each other and form a resonant combined antenna structure (23, 25, 37, 42, 47) with regard to a frequency spectrum to be transmitted by means of this combined antenna structure (23, 25, 37, 42, 47),
wherein the active coupling between the first (25, 37, 42, 47) and second part (23) of the antenna structure is capacitive, inductive, or galvanic.

2. Arrangement according to Claim 1,
**characterized in that**
the first part of the antenna structure is formed as a substantially U-shaped part (25) of a halved loop antenna, wherein the free ends of both U-legs are actively coupled to the metallic plate body (23) when the plate (21) is supported by the plate support (22).

3. Arrangement according to Claim 1,
**characterized in that**
the first part of the antenna structure is designed as a substantially linear ground-plane antenna (37, 42), which has a flat metal structure (38) at one of its two ends, which is actively coupled to the metallic plate body (23) when the plate (21) is supported by the plate support (22), wherein a surface area of the metal structure (38) is multiple times smaller than an area of the metallic plate body (23).

4. Arrangement according to Claim 1,
**characterized in that**
the first part of the antenna structure is designed as an inverted F-antenna (47), which has a flat metal structure (38) which is actively coupled to the metallic plate body (23) when the plate (21) is supported by the plate support (22), wherein a surface area of the metal structure (38) is multiple times smaller than an area of the metallic plate body (23).

5. Arrangement according to any one of the preceding claims,
**characterized in that**
the data carrier (31, 51) has a plurality of first parts (25, 47) of the antenna structure, which are each individually actively coupled to the metallic plate body (23) and form the resonant combined antenna structure (23, 25, 47) when the plate (21) is supported by the plate support (22), wherein the electronic control and memory unit (27) is actively coupled to each of the plurality of first parts (25, 47) of the antenna structure.

6. Arrangement according to any one of the preceding claims,
**characterized in that**
the matching network has a coupling loop (26), via which the control and memory unit (27) is inductively actively coupled to the first part (25) of the antenna structure.

7. Arrangement according to the preceding claim,
**characterized in that**
the coupling loop (26) can be moved along at least one section of the first part (25) of the antenna structure.

8. Arrangement according to any one of the preceding claims,
**characterized in that**
the data carrier (24, 31, 36, 41, 46, 51) has an electrically insulating substrate (28) on which the first part (25, 37, 42, 47) of the antenna structure, the control and memory unit (27) and the matching network (26, 32) are arranged, wherein the control and memory unit (27) and the matching network (26, 32) are arranged on a first side of the substrate (28) and the first part (25, 37, 42, 47) of the antenna structure is arranged on a second side opposite to the first side.

9. Arrangement according to the preceding claim,
**characterized in that**
the substrate (28) has a dielectric constant in the range between 4 and 80.

10. Arrangement according to any one of the preceding claims,
**characterized in that**
the data carrier (24, 31, 36, 41, 46, 51) is enclosed in a housing.

11. Arrangement according to the preceding claim,
**characterized in that**
the housing is made of a material having a dielectric constant in the range between 1 and 5.

12. Arrangement according to either of the two preceding claims,
**characterized in that**
the housing is formed by the plate support (22).

13. Arrangement according to any one of the preceding claims,
**characterized in that**
the data carrier (24, 31, 36, 41, 46, 51) is mounted on the plate support (22) in such a way that forcibly removing the plate support (22) from the object irreversibly destroys the function of the data carrier (24, 31, 36, 41, 46, 51).

14. Arrangement according to any one of the preceding claims,
**characterized in that**
after the arrangement of the plate (21) on the plate support (22) the data carrier (24, 31, 36, 41, 46, 51) is connected to the plate (21) by means of a mechanical connection that cannot be removed non-destructively, wherein forcibly removing the plate (21) from the plate support (22) irreversibly destroys the function of the data carrier (24, 31, 36, 41, 46, 51).

## Revendications

1. Ensemble constitué d'une plaque (21) et d'un support de plaque (22) portant la plaque (21) de manière stationnaire sur un objet, la plaque (21) comportant un corps (23) de plaque métallique et sur le support de plaque (22) étant fixé un support de données (24, 31, 36, 41, 46, 51) électronique, lisible sans contact par voie électromagnétique, qui comporte une première partie (25, 37, 42, 47) d'une structure d'antenne, ainsi qu'une unité de commande et de mémoire (27) couplée de manière active par l'intermédiaire d'un réseau d'adaptation (26, 32) avec la première partie (25, 37, 42, 47) de la structure d'antenne,
**caractérisé en ce que**
le corps (23) de plaque métallique constitue une deuxième partie de la structure d'antenne, complémentaire de la première partie (25, 37, 42, 47) de la structure d'antenne, qui par le placement de la plaque (21) sur le support de plaque (22) portant cette dernière est positionnée par rapport à la première partie (25, 37, 42, 47) de la structure d'antenne du support de données (24, 31, 36, 41, 46, 51) de telle sorte que la première (25, 37, 42, 47) et la deuxième partie (23) de la structure d'antenne soient couplées de manière active l'une avec l'autre et constituent une structure totale d'antenne (23, 25, 37, 42, 47) résonante par rapport à un spectre de fréquences qui doit être transmis à l'aide de ladite structure totale d'antenne (23, 25, 37, 42, 47),
le couplage actif entre la première (25, 37, 42, 47) et la deuxième partie (23) de la structure d'antenne s'effectuant de manière capacitive, inductive ou galvanique.

2. Ensemble selon la revendication 1,
**caractérisé en ce que**
la première partie de la structure d'antenne est conçue sous la forme d'une partie (25) sensiblement en forme de U d'une antenne en boucle réduite de moitié, les extrémités libres des deux branches du U étant couplées de manière active avec le corps (23) de plaque métallique lorsque la plaque (21) est portée par le support de plaque (22).

3. Ensemble selon la revendication 1,
**caractérisé en ce que**
la première partie de la structure d'antenne est conçue sous la forme d'une antenne ground plane (37, 42) de forme sensiblement linéaire, qui sur l'une de ses deux extrémités comporte une structure métallique (38) plane, qui est couplée de manière active avec le corps (23) de plaque métallique lorsque la plaque (21) est portée par le support de plaque (22), une dimension superficielle de la structure métallique (38) étant inférieure d'un multiple à une surface du corps (23) de plaque métallique.

4. Ensemble selon la revendication 1,
**caractérisé en ce que**
la première partie de la structure d'antenne est conçue sous la forme d'une antenne en F inversé (47), qui comporte une structure métallique (38) plane, qui est couplée de manière active avec le corps (23) de plaque métallique lorsque la plaque (21) est portée par le support de plaque (22), une dimension superficielle de la structure métallique (38) étant inférieure d'un multiple à une surface du corps (23) de plaque métallique.

5. Ensemble selon l'une quelconque des revendications précédentes,
**caractérisé en ce que**
le support de données (31, 51) comporte plusieurs premières parties (25, 47) de la structure d'antenne, dont chacune est couplée individuellement de manière active avec le corps (23) de plaque métallique et qui constituent la structure totale d'antenne (23, 25, 47) résonante, lorsque la plaque (21) est portée par le support de plaque (22), l'unité de commande et de mémoire (27) électronique étant couplée de manière active avec chaque fois chacune des plusieurs premières parties (25, 47) de la structure d'antenne.

6. Ensemble selon l'une quelconque des revendications précédentes,
**caractérisé en ce que**
le réseau d'adaptation comporte une boucle de couplage (26), par l'intermédiaire de laquelle l'unité de commande et de mémoire (27) est couplée de manière active, par induction avec la première partie (25) de la structure d'antenne.

7. Ensemble selon la revendication précédente,
**caractérisé en ce que**
la boucle de couplage (26) est déplaçable le long d'au moins un segment de la première partie (25) de la structure d'antenne.

8. Ensemble selon l'une quelconque des revendications précédentes,
**caractérisé en ce que**
le support de données (24, 31, 36, 41, 46, 51) comporte un substrat (28) isolant électrique, sur lequel sont placés la première partie (25, 37, 42, 47) de la structure d'antenne, l'unité de commande et de mémoire (27) et le réseau d'adaptation (26, 32), l'unité de commande et de mémoire (27) et le réseau d'adaptation (26, 32) étant placés sur une première face du substrat (28) et la première partie (25, 37, 42, 47) de la structure d'antenne étant placée sur une deuxième face opposée à la première face.

9. Ensemble selon la revendication précédente,
**caractérisé en ce que**
le substrat (28) présente une constante diélectrique de l'ordre compris entre 4 et 80.

10. Ensemble selon l'une quelconque des revendications précédentes,
**caractérisé en ce que**
le support de données (24, 31, 36, 41, 46, 51) est entouré par un boîtier.

11. Ensemble selon la revendication précédente,
**caractérisé en ce que**
le boîtier est constitué d'une matière avec une constante diélectrique de l'ordre compris entre 1 et 5.

12. Ensemble selon l'une quelconque des deux revendications précédentes,
**caractérisé en ce que**
le boîtier est constitué par le support de plaque (22) .

13. Ensemble selon l'une quelconque des revendications précédentes,
**caractérisé en ce que**
le support de données (24, 31, 36, 41, 46, 51) est fixé sur le support de plaque (22) de telle sorte qu'un retrait de force du support de plaque (22) de l'objet détruise de manière irréversible la fonction du support de données (24, 31, 36, 41, 46, 51).

14. Ensemble selon l'une quelconque des revendications précédentes,
**caractérisé**
**en ce qu'**après le placement de la plaque (21) sur le support de plaque (22), le support de données (24, 31, 36, 41, 46, 51) est relié par l'intermédiaire d'une liaison non désolidarisable sans destruction avec la plaque (21), un retrait de force de la plaque (21) du support de plaque (22) détruisant de manière irréversible la fonction du support de données (24, 31, 36, 41, 46, 51).
